# EUROPEAN PATENT APPLICATION

(11) **EP 3 933 576 A1**
(43) Date of publication of application: **05.01.2022**
(21) Application number: 21169126.6
(22) Date of filing: 19.04.2021
(51) Int. Cl.: G06F 9/445, B60W 50/00, G06Q 30/06

(54) **SERVER, MANAGING METHOD, NON-TRANSITORY STORAGE MEDIUM, SOFTWARE UPDATING DEVICE, CENTER, AND OVER-THE-AIR MASTER**

(30) Priority: 30.06.2020 JP 2020113422
(71) Applicant: TOYOTA JIDOSHA KABUSHIKI KAISHA, Toyota-shi, Aichi-ken 471-8571 (JP)
(72) Inventor: TAKATSUNA, Yusuke, Toyota-shi, Aichi-ken,, 471-8571 (JP)
(74) Representative: J A Kemp LLP

(57) **Abstract**

A server (1) configured to communicate with a vehicle includes: a storage device (23) configured to store usage information, in which settings information of software executed by at least one of a plurality of electronic control units (11, 13a, 13b, 13c, 13d, 13e) installed in the vehicle is correlated with user identification information that identifies a user of the vehicle; and one or more processors configured to receive, from a software updating device (11) that is one of the electronic control units (11, 13a, 13b, 13c, 13d, 13e), the user identification information specified by the software updating device (11), and transmit settings information correlated with the user identification information to the software updating device (11) based on the user identification information which is specified and the usage information.

## Description

### BACKGROUND OF THE INVENTION

### 1. Field of the Invention

The present disclosure relates to a server, a managing method, and a non-transitory storage medium, an software updating device, a center, and an over-the-air master..

### 2. Description of Related Art

Vehicles have a plurality of electronic control units (ECU) onboard, for controlling operations of the vehicle. An ECU is provided with a processor, a transitory storage unit such as a random access memory (RAM), and a nonvolatile storage unit such as a flash read-only memory (ROM), with the processor executing software stored in the nonvolatile storage unit, thereby realizing control functions of the ECU. The software stored in the ECUs is rewritable, and updating to a newer version of the software enables the functions of the ECUs to be improved, new functions to be added, and so forth.

As an example of technology for updating software of ECUs is over-the-air (OTA) technology, in which communication equipment provided to an onboard network wirelessly connects to a communication network such as the Internet or the like, software is downloaded from a distribution server provided in a center through wireless communication, and the downloaded software is installed, thereby updating or adding software for the ECU.

Servers that distribute software often mange versions of software of the ECUs installed in the vehicle, and combinations of the versions, based on vehicle identification numbers. For example, Japanese Unexamined Patent Application Publication No 2018-181377 (JP 2018-181377 A) describes a system in which a gateway provided to a vehicle transmits an identification number of the vehicle and version information of control programs for the ECUs to a management server, the management server determines whether updating of the control programs is necessary based on a revision table, and when necessary, transmits an update program to the gateway.

### SUMMARY OF THE INVENTION

In a vehicle capable of updating and addition of software by the above-described OTA, software that can be used by the vehicle, the range of functions provided by executing the software, the way in which the functions are used, and so forth, will likely differ among users, in accordance with the billing status of the user, setting of permission/non-permission regarding OTA by each user, learned values based on user preferences and past vehicle usage history, and so forth.

In recent years, the way in which vehicles are used has come to be varied among users, which includes a case where one user uses a plurality of vehicles, a case where a plurality of users share one vehicle such as in car sharing, and so forth. If the combinations of usable software and the range of functions provided by the software can be made as close to the same as possible regardless of which vehicle the same user uses, the look and feel for the user will not greatly change each time the user uses a vehicle, which can improve convenience for the user.

The present disclosure provides a server, a managing method, and a non-transitory storage medium, an software updating device, a center, and an over-the-air master..

A server according to a first aspect of the present disclosure is configured to communicate with a vehicle. The server includes: a storage device configured to store usage information, in which settings information of software executed by at least one of a plurality of electronic control units installed in the vehicle is correlated with user identification information that identifies a user of the vehicle; and one or more processors configured to receive, from a software updating device that is one of the electronic control units, the user identification information specified by the software updating device, and transmit settings information correlated with the user identification information to the software updating device based on the user identification information which is specified and the usage information.

A managing method according to a second aspect of the present disclosure is a method executed by a computer that has a processor, a memory, and a storage device. The managing method includes: storing usage information, in which settings information of software executed by at least one of a plurality of electronic control units installed in a vehicle is correlated with user identification information that identifies a user of the vehicle; receiving, from a software updating device that is one of the electronic control units, the user identification information specified by the software updating device; and transmitting settings information correlated with the user identification information to the software updating device based on the user identification information which is specified and the usage information.

A non-transitory storage medium according to a third aspect of the present disclosure stores a management program that is executable by a computer provided with a processor, a memory, and the non-transitory storage medium, and that causes the computer to perform functions comprising: storing usage information, in which settings information of software executed by at least one of a plurality of electronic control units installed in a vehicle is correlated with user identification information that identifies a user of the vehicle; receiving, from a software updating device that is one of the electronic control units, the user identification information specified by the software updating device; and transmitting settings information correlated with the user identification information to the software updating device based on the user identification information which is specified and the usage information.

A software updating device according to a fourth aspect of the present disclosure is configured to communicate with a server. The software updating device includes one or more processors configured to: acquire user identification information that identifies a user of a vehicle; acquire, from the server, settings information of software executed by at least one of a plurality of electronic control units installed in the vehicle, the settings information being correlated with the user identification information; and transfer the settings information to the at least one of the electronic control units.

A center according to a fifth aspect of the present disclosure is configured to communicate with a vehicle. The center includes: a storage device configured to store usage information, in which settings information of software executed by at least one of a plurality of electronic control units installed in the vehicle is correlated with user identification information that identifies a user of the vehicle; and one or more processors configured to receive, from an over-the-air master that is one of the electronic control units, the user identification information specified by the over-the-air master, and transmit the settings information correlated with the user identification information to the over-the-air master based on the user identification information which is specified and the usage information.

An over-the-air master according to a sixth aspect of the present disclosure is configured to communicate with a center. The over-the-air master includes one or more processors configured to: acquire user identification information that identifies a user of a vehicle; acquire, from the center, settings information of software executed by at least one of a plurality of electronic control units installed in the vehicle, the settings information being correlated with the user identification information; and transfer the settings information to the at least one of the electronic control units.

According to the present disclosure, a server, a managing method, and a non-transitory storage medium, that enable use of a vehicle without greatly changing the look and feel for the user, and an onboard software updating device, can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating an overall configuration of a network system according to an embodiment;
FIG. 2 is a block diagram illustrating a schematic configuration of a server illustrated in FIG. 1;
FIG. 3 is a block diagram illustrating a schematic configuration of a software updating device illustrated in FIG. 1;
FIG. 4 is a functional block diagram of the server illustrated in FIG. 1;
FIG. 5 is a diagram illustrating an example of usage information that the server illustrated in FIG. 1 stores;
FIG. 6 is a functional block diagram of the software updating device illustrated in FIG. 1;
FIG. 7 is a flowchart illustrating an example of control processing that the server according to the embodiment executes;
FIG. 8 is a flowchart illustrating an example of setting processing that the software updating device according to the embodiment executes; and
FIG. 9 is a flowchart illustrating an example of updating processing that the software updating device according to the embodiment executes.

### DETAILED DESCRIPTION OF EMBODIMENTS

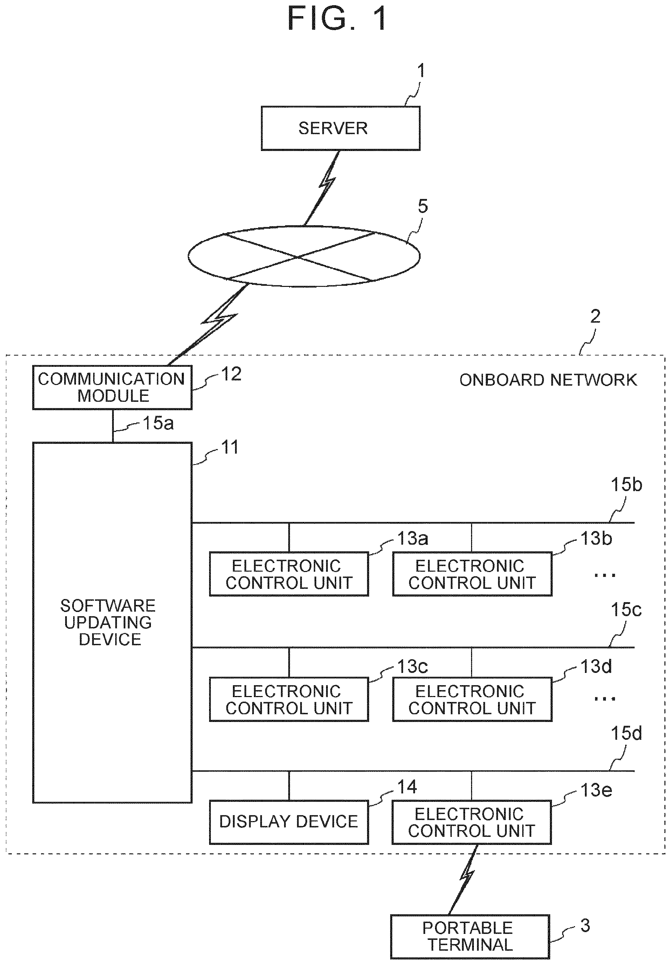

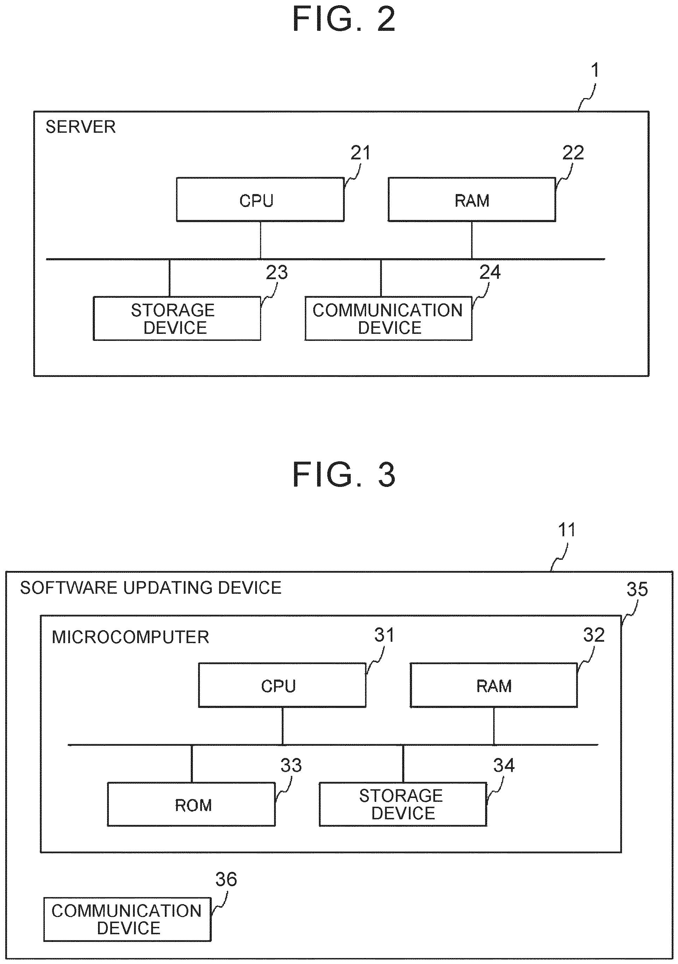

FIG. 1 is a block diagram illustrating an overall configuration of a network system according to an embodiment, FIG. 2 is a block diagram illustrating a schematic configuration of a server illustrated in FIG. 1, and FIG. 3 is a block diagram illustrating a schematic configuration of a software updating device illustrated in FIG. 1.

The network system illustrated in FIG. 1 is a system for updating software of electronic control units 13a through 13e installed in the vehicle, and is provided with a server 1 (center) and an onboard network 2 installed in a vehicle. The network system in FIG. 1 can also control functions provided by a software updating device 11 and the electronic control units 13a through 13e executing software.

The server 1 is capable of communication with the software updating device 11 installed in the vehicle, via a network 5, and manages usage information including settings information of one or more pieces of software executed by the software updating device 11 and the electronic control units 13a through 13e.

The server 1 is provided with a central processing unit (CPU) 21, a random access memory (RAM) 22, a storage device 23, and a communication device 24, as illustrated in FIG. 2. The storage device 23 is provided with a rewritable storage medium such as a hard disk, a solid state drive (SSD), or the like, and stores programs for executing software update management, and later-described usage information. In the server 1, the CPU 21 executes software read out from the storage device 23, using the RAM 22 as a work area, thereby executing later-described control processing. The communication device 24 is communication equipment for performing communication with the software updating device 11 via the network 5 such as the Internet or the like. The server 1 may be provided with a plurality of the CPUs 21, the RAMs 22, the storage devices 23, and the communication devices 24.

The onboard network 2 is provided with the software updating device 11 (OTA master), a communication module 12, the electronic control units 13a through 13e, and a display device 14. The software updating device 11 is connected to the communication module 12 via a bus 15a, connected to the electronic control units 13a and 13b via a bus 15b, connected to the electronic control units 13c and 13d via a bus 15c, and connected to the electronic control unit 13e and the display device 14 via a bus 15d. The software updating device 11 is a device that is able to communicate with the server 1 wirelessly (over the air) via the communication module 12 and the network 5, download updating data for the software of the electronic control units 13a through 13e from the server 1, transfer the downloaded update data to the electronic control unit that is the object of updating, and instruct the electronic control unit to update the software. The software updating device 11 may also be referred to as a central gateway. The software updating device 11 is also able to acquire, from the server 1, settings information from one or more piece of software that the software updating device 11 and the electronic control units 13a through 13e execute. The communication module 12 is a communication device that connects the onboard network 2 and the server 1 installed in the center. The electronic control units 13a through 13e are ECUs that control operations of various parts of the vehicle, and that include a CPU, a RAM, and a nonvolatile storage device such as a flash memory, an electrically erasable programmable ROM (EEPROM), or the like. The CPU executes software stored in the storage device, using the RAM as a work area, thereby executing control functions. Of these, the electronic control unit 13e is equipment that is able to communicate with a later-described portable terminal 3. The electronic control unit 13e is an ECU that is provided with an antenna and a transceiver, for example, and that performs authentication processing by communication with the portable terminal 3, and performs control for unlocking of doors of the vehicle, starting an engine, and so forth. The display device 14 (human-machine interface (HMI)) is used to perform various types of display relating to functions provided by any one of the software updating device 11 and the electronic control units 13a through 13e, and to display a screen for a user to input setting values. Typically, the display device of an automotive navigation system can be used as the display device 14, but the display device 14 is not limited in particular, as long as an arrangement that is able to display information. Note that while five electronic control units 13a through 13e are exemplified in FIG. 1, the number of electronic control units is not limited in particular.

As illustrated in FIG. 3, the software updating device 11 is provided with a microcomputer 35 having a CPU 31, a RAM 32, a ROM 33, and a storage device 34, and a communication device 36. In the software updating device 11, the CPU 31 of the microcomputer 35 executes software read out from the ROM 33, using the RAM 32 as a work area, thereby executing later-described control processing. The communication device 36 is a communication device that performs communication with the communication module 12, the electronic control units 13a through 13e, and the display device 14, via the busses 15a through 15d illustrated in FIG. 1. The software updating device 11 may be provided with a plurality of the microcomputers 35, the CPUs 31, the RAMs 32, the ROMs 33, the storage devices 34, and the communication devices 36. The software updating device 11 also is a type of electronic control unit.

The portable terminal 3 in the present embodiment is a terminal device that is capable of communication with the electronic control unit 13e, and is, for example, a portable device (wireless key) used as a key of the vehicle, a smartphone, or the like. The communication format between the portable terminal 3 and the electronic control unit 13e is not limited in particular, and radio frequency (RF) or low frequency (LF) communication, Bluetooth (registered trademark) Low Energy (BLE), Wi-Fi (registered trademark), and so forth, can be used. When communicating with the electronic control unit 13e, the portable terminal 3 transmits, to the electronic control unit 13e, unique identification information assigned to the portable terminal 3 or unique identification information assigned to the user. The identification information assigned to the portable terminal 3 and the identification information assigned to the user can be used as user identification information (user ID) for identifying the user.

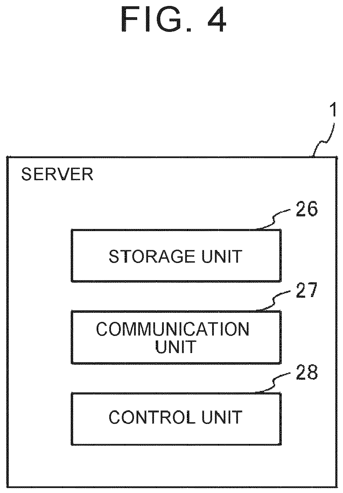

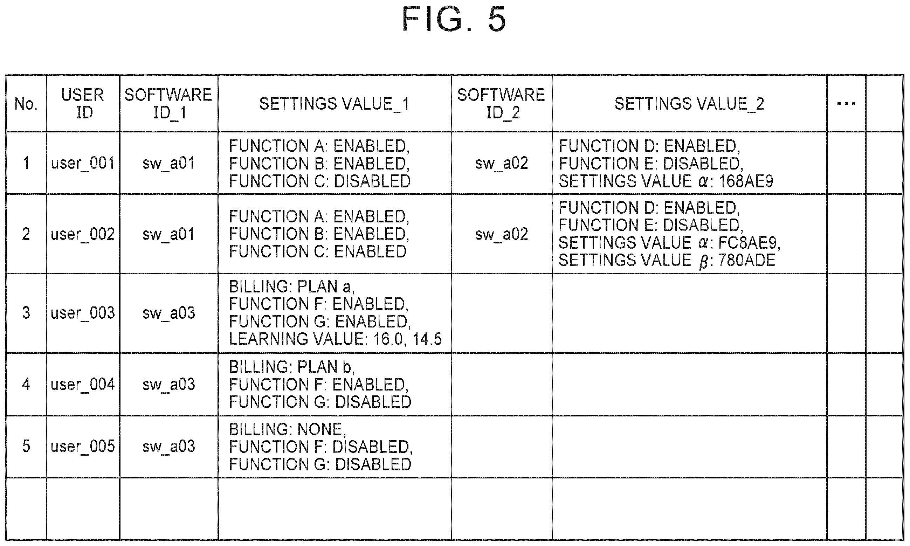

FIG. 4 is a functional block diagram of the server illustrated in FIG. 1, and FIG. 5 is a diagram illustrating an example of usage information that the server illustrated in FIG. 1 stores. Note that the column of "No." in FIG. 5 is provided for explanatory purposes, and may be omitted.

The server 1 is provided with a storage unit 26, a communication unit 27, and a control unit 28. The storage unit 26 is realized by the storage device 23 illustrated in FIG. 2, and the communication unit 27 and the control unit 28 are realized by the CPU 21 illustrated in FIG. 2 using the RAM 22 to execute software stored in the storage device 23.

The storage unit 26 stores usage information. The usage information is information in which settings information of one or more pieces of software that the software updating device 11 and electronic control units 13a through 13e execute is correlated with the user ID identifying the user. It is sufficient for the user ID to be information by which the user can be uniquely identified, usable examples of which include an identifier issued based on user registration performed in advance, an email address or telephone number of the user, identification information of the portable device used as the key of the vehicle, and so forth. Usage information can be generated by the user ID and settings information being stored correlatedly in the server 1, at the time of newly registering the user, or following the first time that the vehicle is used after user registration.

In the example of usage information illustrated in FIG. 5, software IDs that identify software, and settings information including settings values of the software identified by the software IDs, are correlated with respect to user IDs. In the usage information, one or a plurality of software IDs of software that can be executed by one or a plurality of electronic control units (any of the software updating device 11 and the electronic control units 13a through 13e), and settings values of the software, may be correlated with one user ID. Note that while objects of settings values are identified using software IDs in the example in FIG. 5, identification information that identifies electronic control units may be used instead of software IDs.

Settings values stored for each software ID are information referenced when the electronic control unit executes the software identified by the software ID. More specifically, settings values include information representing at least one of software usable by the vehicle, functions that software usable by the vehicle can provide (range of functions that can be provided, and whether functions are enabled), whether updating software via wireless communication (updating by OTA) is permissible, settings values registered at the vehicle side, learning values that the software has learned while using the vehicle, and the billing status for the software.

Description of a specific example will be made below with reference to FIG. 5.

The usage information of No. 1 and No. 2 shown in the table in FIG. 5 include settings information of software identified by software IDs "sw_a01" and "sw_a02" with regard to users, and the range of functions that can be used differ depending on the user ID. Specifically, in the usage information of the user ID "user_001", functions A, B, and D are set to be enabled, and a value of a settings value α used by software ID "sw_a02" is set. In the usage information of the user ID "user_002", functions A through D are set to be enabled, and values of settings values α and β used by software ID "sw_a02" are set.

Also, the usage information of Nos. 3 through 5 shown in the table in FIG. 5 include settings information for software ID "sw_a03" with regard to users, and ranges for additional functions that can be used differ depending on billing statuses. Specifically, in the usage information of user ID "user_003", billing is set to be performed for Plan a, additional functions F and G are set to be enabled, and learning values learned by the software while using the vehicle the previous time are set. In the usage information of user ID "user_004", billing is set to be performed for Plan b, and the additional function F is set to be enabled. Also, in the usage information of user ID "user_005", billing is set not to be performed, and the additional functions F and G are set to be disabled.

In recent years, the way in which vehicles are used has come to be varied, which includes a case where one user uses a plurality of vehicles, and a case where a plurality of users using one vehicle, and so forth. In the present embodiment, usage information, in which software settings information is correlated with user IDs such as shown in FIG. 5, is stored in the server, and is distributed from the server 1 to the electronic control units when usage of the vehicle is started, or the like, which will be described later. According to the present embodiment, when one user uses a plurality of vehicles, software and functions set in the usage information of the user can be used in any of the different vehicles. Also, when a plurality of users uses one vehicle, each of the users can use software and functions set in the usage information of the user when using the vehicle. Accordingly, vehicles can be used with the look and feel for the user not changing greatly. Also, in a vehicle that is capable of updating software via wireless communication (updating by OTA), user consent is necessary at the time of performing updating processing of the software. When sharing such a vehicle that is capable of updating software by OTA among a plurality of users, updating functions of software by OTA is preferably limited to users having authority, such as an owner, manager, or the like, of the vehicle. By setting the permission and non-permission of using software updating functions by the software updating device 11 for each user in the usage information, software updating by OTA can be executed only by particular users.

Specific examples of settings information that can be specifically set in the settings information include, but are not limited to, turning on welcome lamps when the user approaches the vehicle, automatic operation and temperature settings of an air conditioner, settings of seat positions, driving mode, correction values (constants, learned values) for adjustment of braking and driving power, acquired based on driving characteristics of the user, and so forth.

Based on a request from the software updating device, the communication unit 27 acquires settings information stored correlatedly with the user ID specified by the software updating device 11 from the storage unit 26, and transmits the acquired settings information to the software updating device 11. Also, after usage of the vehicle ends, the communication unit 27 receives an update request from the software updating device 11 including the user ID of the user who was using the vehicle, and settings information of one or more pieces of software that the software updating device 11 and the electronic control units 13a through 13e were executing in the vehicle. This update request is an instruction to update the usage information stored in the storage unit 26, using settings values newly set or changed by the user, learning values learned by the software, and so forth, while using the vehicle. The communication unit 27 also accepts a transmission request for settings information, which is transmitted from the software updating device 11.

Upon the communication unit 27 receiving the update request, the usage information stored in the storage unit 26 is updated by the control unit 28 based on the received user ID and settings information.

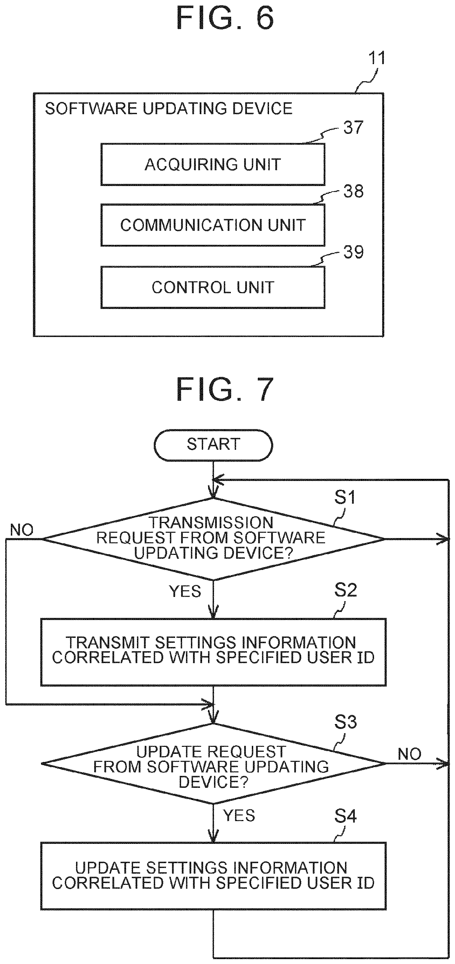

FIG. 6 is a functional block diagram of the software updating device illustrated in FIG. 1.

The software updating device 11 is provided with an acquiring unit 37, a communication unit 38, and a control unit 39. The acquiring unit 37, the communication unit 38, and the control unit 39 are realized by the CPU 31 illustrated in FIG. 3 executing software stored in the ROM 33, using the RAM 32.

The acquiring unit 37 acquires a user ID identifying the user when starting usage of the vehicle. The electronic control unit 13e is capable of bringing the user ID onto the onboard network 2 by performing communication with the portable terminal 3 of the user in the present embodiment, as illustrated in FIG. 1. Accordingly, the acquiring unit 37 is capable of acquiring the user ID that the electronic control unit 13e has received from the portable terminal 3. Alternatively, the acquiring unit 37 may acquire the user ID that the portable terminal 3 stores by performing direct communication with the portable terminal 3, instead of acquiring the user ID that the portable terminal 3 stores via the electronic control unit 13e. Also, the acquiring unit 37 may display an indication prompting input of user ID on the display device 14, and acquire the user ID by the user's operation on an input device that is omitted from illustration, or by biometric authentication based on user information registered in advance.

When starting to use the vehicle, the communication unit 38 transmits the user ID acquired by the acquiring unit 37 to the server 1, and requests transmission of settings information. The communication unit 38 receives the settings information transmitted from the server 1, and stores the received settings information in the storage device 34. After usage of the vehicle ends, the communication unit 38 also transmits, to the server 1, an update request including the user ID that the acquiring unit 37 has acquired, and settings information acquired by the control unit 39.

The control unit 39 reads out the settings information acquired by the communication unit 38 from the storage device 34, and transfers settings values included in the settings information that is read out to the electronic control unit identified by the software ID included in the settings information. When settings values of software executed by the software updating device 11 are included in the settings information acquired from the server 1, the control unit 39 stores the settings values of the software that the software updating device 11 executes in a predetermined storage region. Also, after usage of the vehicle ends, the control unit 39 acquires settings information for software from one or more of the software updating device 11 and the electronic control units 13a through 13e.

In addition to the above processing, the communication unit 38 and the control unit 39 perform software updating processing of the electronic control units 13a through 13e by wireless communication with the server 1. Now, software uploading processing includes the three phases of downloading, in which updating data is transmitted from the server 1 to the vehicle, installation, in which the downloaded update data is transferred to the electronic control unit that is the object of updating and the update data is written to the storage region of the electronic control unit that is the object of updating, and activation, in which the update program installed in the electronic control unit that is the object of updating is enabled.

Downloading is processing of receiving and storing update data that is transmitted from the server 1, for updating software of an electronic control unit. The download phase includes not only reception of update data, but also includes control of a series of processing relating to downloading, such as determining whether execution of downloading is permissible, verifying the update data, and so forth. Installation is processing of causing the electronic control unit that is the object of updating to write an update-version program (update software) to a storage unit of onboard equipment, based on the downloaded update data. The installation phase includes not only execution of installation, but also includes control of a series of processing relating to installation, such as determining whether installation is permissible, transferring the update data, verifying the update-version program, and so forth. Activation is processing of enabling (activating) the installed update-version program. The control of activation includes not only execution of activating, but also includes control of a series of processing relating to activating, such as judging whether execution of activation is permissible, verifying the execution results, and so forth.

The update data transmitted from the server 1 to the software updating device 11 may contain any of update software for the electronic control units, compressed data in which update software has been compressed, and divided data in which update software or compressed data has been divided. Also, the update data may include an identifier for identifying the electronic control unit that is the object of updating (ECU ID), and an identifier for identifying software before updating (ECU software ID). As described above, the aforementioned update data is downloaded as a distribution package, and the distribution package contains update data of one or a plurality of the electronic control units.

When the update data includes the update software itself, the software updating device transfers the update data (update software) to the electronic control unit that is the object of updating in the installation phase. Also, when the update data includes compressed data, differential data, or divided data of the update software, the software updating device 11 may transfer the update data to the electronic control unit that is the object of updating and the electronic control unit that is the object of updating may generate the update software from the update data, or the software updating device 11 may generate the update software from the update data, and transfer the update software to the electronic control unit that is the object of updating. Now, generating the update software can be performed by decompressing compressed data, or assembling differential data or divided data.

Installation of the update software can be performed by the electronic control unit that is the object of updating, based on an installation request from the software updating device 11. Alternatively, the electronic control unit that is the object of updating, which has received the update data, may autonomously install the update software without receiving any explicit instruction from the software updating device 11.

Activation of the update software can be performed at the electronic control unit that is the object of updating, based on an activation request from the software updating device 11. Alternatively, the electronic control unit that is the object of updating, which has received the update data, may autonomously activate the update software without receiving any explicit instruction from the software updating device 11.

Note that updating processing of software can be performed consecutively or in parallel on each of the electronic control units.

The communication unit 38 transmits a confirmation request to the server 1 for confirming whether there is update data for the software of the electronic control units 13a through 13e, at a predetermined timing, such as a timing when the power source or the ignition of the vehicle is turned on, or the like, and receives results of confirmation made at the server 1 (information indicating whether there is update data). The communication unit 38 also transmits a download request for a distribution package to the server 1, and receives the distribution package transmitted from the server 1. The distribution package may contain verification data for verifying authenticity of the update data, number of pieces of update data, order of installation, and various types of control information used when updating software, and so forth. The communication unit 38 causes the storage device 34 to store the received distribution package. The communication unit 38 verifies the authenticity of the received update data.

When the downloading of the distribution package by the communication unit 38 is completed, the control unit 39 performs installation and activation to the electronic control unit that is the object of updating. Note that the electronic control unit that is the object of updating can be identified based on information included in the distribution package (identification information of the electronic control unit correlated with the update data or the like).

Control processing that the server 1 and the software updating device 11 execute will be described below.

FIG. 7 is a flowchart illustrating an example of control processing that the server according to the embodiment executes. The control processing illustrated in FIG. 7 is repeatedly executed at the server 1 at predetermined time intervals.

In step S1, the communication unit 27 determines whether a transmission request for settings information has been received from the software updating device 11. When the determination in step S1 is YES, the processing advances to step S2, and otherwise, the processing advances to step S3.

In step S2, the communication unit 27 references the usage information stored in the storage unit 26, and acquires settings information correlated with the user ID included in the transmission request received from the software updating device 11. The communication unit 27 transmits the acquired settings information to the software updating device 11. Thereafter, the processing advances to step S3.

In step S3, the communication unit 27 determines whether an update request for settings information has been received from the software updating device 11. When the determination in step S3 is YES, the processing advances to step S4, and otherwise, advances to step S1.

In step S4, the control unit 28 identifies settings information correlated with the user ID included in the update request received from the software updating device 11, out of the usage information stored in the storage unit 26, and updates the identified settings information with the new settings information included in the update request. Thereafter, the processing advances to step S1.

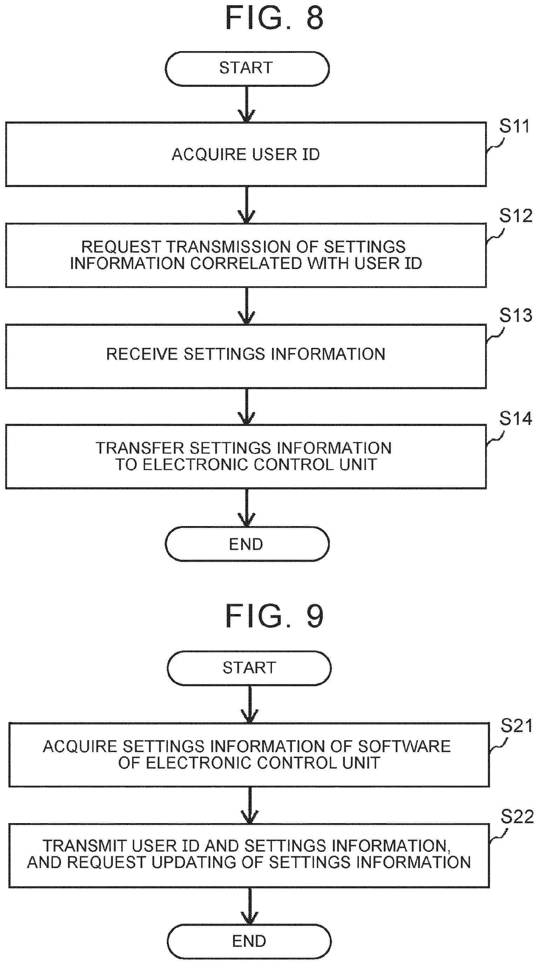

FIG. 8 is a flowchart illustrating an example of setting processing that the software updating device according to the embodiment executes. The control processing shown in FIG. 8 is executed when usage of the vehicle is started, for example. The settings information that the software updating device 11 acquires from the server 1 contains settings values of one or more pieces of software that the software updating device 11 and the electronic control units 13a through 13e execute, and accordingly, this may be executed prior to the electronic control units 13a through 13e activating software, i.e., by the time that the power source or the ignition of the vehicle is turned on. The control processing shown in FIG. 8 can be started at one of the following, i.e., when authentication using the portable terminal 3 to unlock the vehicle succeeds, when a user holding the portable terminal 3 used for authentication is detected entering the vehicle, and when an instruction is received from the portable terminal 3 used for authentication prior to the power source or the ignition of the vehicle being turned on. Note however, that when the electronic control unit referencing the settings information acquired from the server 1 is not an electronic control unit that affects operations of the vehicle, the control processing in FIG. 8 may be started to acquire settings information from the server 1 following the power source or the ignition of the vehicle being turned on, and the software of the electronic control unit that is the object may be restarted based on the acquired settings information.

In step S11, the acquiring unit 37 acquires a user ID. The user ID may be directly acquired by the acquiring unit 37 from the portable terminal 3 used for authentication to operate the vehicle, or alternatively the acquiring unit 37 may acquire the user ID via the electronic control unit 13e as illustrated in FIG. 1. Thereafter, the processing advances to step S12.

In step S12, the communication unit 38 transmits a transmission request for settings information, including the user ID acquired in step S11, to the server 1. Thereafter the processing advances to step S13.

In step S13, the communication unit 38 acquires settings information transmitted from the server 1 in response to the transmission request transmitted in step S12. Thereafter the processing advances to step S14.

In step S14, the control unit 39 transfers the settings values included in the settings information acquired in step S13 to the electronic control unit identified in the settings information, and ends the processing. When settings values for software that the software updating device 11 executes are included in the settings information acquired in step S13, the control unit 39 stores the settings values for software that the software updating device 11 executes in a predetermined storage region. Note that upon receiving the settings values, the software updating device 11 and the electronic control units 13a through 13e each execute the software based on the received settings values, and thereby provide functions and so forth that reflect the settings values acquired from the server 1. When one user uses a plurality of vehicles, there may be differences in whether there is software that the electronic control units 13a through 13e can execute, and the range of providable functions, depending on the model of the vehicle, selected options, and billing status. Even in such cases, the settings values of software that the software updating device 11 and the electronic control units 13a through 13e execute can be made to maximally approximate the settings information acquired from the server 1, by reflecting all the settings values that are settable for the vehicle to be used, out of the settings values included in the settings information. Accordingly, even when the user uses different vehicles, the user experience can be made to be the same or approximately equivalent each time, within the functions that the vehicle can provide and the range of vehicle characteristics, thereby suppressing the look and feel for the user from greatly changing.

FIG. 9 is a flowchart illustrating an example of updating processing that the software updating device according to the embodiment executes. The control processing shown in FIG. 9 is processing for saving, in the server, settings values newly set by the user while using the vehicle, settings values changed by the user while using the vehicle, learning values that the software of the electronic control units have learned while the vehicle is used, and so forth, and is executed after usage of the vehicle is completed. The control processing shown in FIG. 9 may be executed with the power source of the vehicle or ignition being turned off, for example, as a trigger.

In step S21, the control unit 39 acquires settings information for software from the software updating device 11 and the electronic control units 13a through 13e. Thereafter, the processing advances to step S22.

In step S22, the communication unit 38 transmits an update request for settings information, including the acquired settings information and the user ID acquired in step S11 of FIG. 8, to the server 1, and ends the processing.

As described above, the server 1 according to the present embodiment stores settings information for software executed by the software updating device 11 and the electronic control units 13a through 13e installed in the vehicle, with settings information correlated with user IDs, and transmits usage information based on requests from the software updating device 11. Accordingly, functions that can be provided to the user by the electronic control units executing software can be managed for each user, and even when the user uses a different vehicle, the user can use approximately equivalent functions.

Also, after usage of the vehicle by the user ends, the server 1 acquires settings information of the software of the software updating device 11 and the electronic control units 13a through 13e and updates usage information, and accordingly equivalent functions can be provided when the same user uses the same vehicle the next time.

Also, various types of information described in FIG. 5 can be set in the usage information that the server 1 stores, and accordingly functions that can be used by the user, and usage arrangements thereof, and so forth, can be finely set, and can be recreated when using the vehicle.

Also, the software updating device 11 according to the present embodiment acquires settings information correlated with the user ID from the server 1, and reflects the settings information when the software updating device 11 and the electronic control units 13a through 13e execute software. Accordingly, even when using a different vehicle, the user can use the same functions.

Also, after usage of the vehicle ends, the software updating device 11 transmits settings values that the software updating device 11 and the electronic control units 13a through 13e reference when executing software to the server 1. Accordingly, settings values for the electronic control units 13a through 13e to execute software can be managed at the server 1, and can be used the next time of using the vehicle.

The functions of the server 1 exemplified as an embodiment can also be realized as a managing method executed by a computer provided with a processor (CPU), a memory, and a storage device, or as a management program for the computer to execute, or as a computer-readable non-transitory storage medium storing the management program. In the same way, the functions of the software updating device 11 exemplified as an embodiment can also be realized as a control method executed by an onboard computer provided with a processor (CPU), a memory, and a storage device, or as a control program for the onboard computer to execute, or as a computer-readable non-transitory storage medium storing the control program.

In the above embodiment, an example has been described in which the software updating device 11 provided in the onboard network 2 at the vehicle side acquires settings information of software of all of the electronic control units 13a through 13e from the server 1, and transmits settings values following updating to the server 1, as a master device, but an arrangement may be made where one of the electronic control units 13a through 13e (an electronic control unit that does not perform software updating control) has the control functions shown in FIGS. 7 through 9, and reception of settings information from the server 1 and update requests for settings information are performed thereby, instead of the software updating device 11. Also, an arrangement may be made where the control functions shown in FIGS. 7 through 9 are provided to external equipment that is capable of wired connection with the onboard network 2, and acquisition of settings information of software of the electronic control units 13a through 13e and update request for settings information are performed by using the external equipment.

Also, the usage information exemplified in the above embodiment may further include the date and time of updating of the settings information. In this case, the usage information is a recording of settings information over time for each user ID. According to this configuration, history can be recorded that, for example, a particular electronic control unit function was disabled before purchasing software or before entering into a contract, but at a certain point in time and thereafter, this particular electronic control unit function was enabled due to purchasing software or being under contract. When some sort of trouble occurs in the software of the electronic control unit, referencing the usage information enables whether the software was enabled or disabled at the period when the software trouble occurred to be comprehended. Also, usage information that records settings information over time for each user ID enables the state of usage of the software by users to be comprehended, and can be used for proposing new functions and software for electronic control units to the users.

Also, the settings information may include information relating to the location of usage of the vehicle. The information relating to the location of usage of the vehicle may be either of information identifying usable locations and information identifying unusable locations, and Global Positioning System (GPS) coordinate ranges, or the like, may be used under names of nations, states, provinces, regions, and so forth. Usage of functions realized by the software updating device 11 or the electronic control units 13a through 13e executing software conceivably might be restricted by law or the like in the location of usage of the vehicle. Accordingly, an arrangement may be made where information relating to the location of usage of the vehicle is included in the settings information, and determination is made at the vehicle side whether usage of the software is permissible, based on information regarding a place of destination set in advance, or acquired GPS coordinates.

The technology of the present disclosure can be used in a network system for managing settings information of software executed by electronic control units.

## Claims

1. A server (1) configured to communicate with a vehicle, the server (1) comprising:
a storage device (23) configured to store usage information, in which settings information of software executed by at least one of a plurality of electronic control units (11, 13a, 13b, 13c, 13d, 13e) installed in the vehicle is correlated with user identification information that identifies a user of the vehicle; and
one or more processors configured to
receive, from a software updating device (11) that is one of the electronic control units (11, 13a, 13b, 13c, 13d, 13e), the user identification information specified by the software updating device (11), and
transmit settings information correlated with the user identification information to the software updating device (11) based on the user identification information which is specified and the usage information.

2. The server (1) according to claim 1, wherein the one or more processors are configured to
after usage of the vehicle ends, receive the user identification information of the user that used the vehicle, and the settings information of the software executed by at least one of the electronic control units (11, 13a, 13b, 13c, 13d, 13e) from the software updating device (11), and
update the usage information stored in the storage device (23), based on the settings information received by the one or more processors.

3. The server (1) according to claim 1 or 2, wherein the usage information includes information representing at least one of usable software, a function providable by the usable software, whether updating software via wireless communication is permissible, a settings value set at the vehicle, a learning value learned by the software during usage of the vehicle, and a billing status for the software.

4. A managing method executed by a computer (1) provided with a processor (21), a memory (22), and a storage device (23), the method comprising:
storing usage information, in which settings information of software executed by at least one of a plurality of electronic control units (11, 13a, 13b, 13c, 13d, 13e) installed in a vehicle is correlated with user identification information that identifies a user of the vehicle;
receiving, from a software updating device (11) that is one of the electronic control units (11, 13a, 13b, 13c, 13d, 13e), the user identification information specified by the software updating device (11); and
transmitting settings information correlated with the user identification information to the software updating device (11) based on the user identification information which is specified and the usage information.

5. A non-transitory storage medium (23) storing a management program that is executable by a computer (1) provided with a processor (21), a memory (22), and the non-transitory storage medium (23), and that causes the computer (1) to perform functions comprising:
storing usage information, in which settings information of software executed by at least one of a plurality of electronic control units (11, 13a, 13b, 13c, 13d, 13e) installed in a vehicle is correlated with user identification information that identifies a user of the vehicle;
receiving, from a software updating device (11) that is one of the electronic control units (11, 13a, 13b, 13c, 13d, 13e), the user identification information specified by the software updating device (11); and
transmitting settings information correlated with the user identification information to the software updating device (11) based on the user identification information which is specified and the usage information.

6. A software updating device (11) configured to communicate with a server, the software updating device (11) comprising one or more processors configured to:
acquire user identification information that identifies a user of a vehicle;
acquire, from the server, settings information of software executed by at least one of a plurality of electronic control units (11, 13a, 13b, 13c, 13d, 13e) installed in the vehicle, the settings information being correlated with the user identification information; and
transfer the settings information to the at least one of the electronic control units (11, 13a, 13b, 13c, 13d, 13e).

7. The software updating device (11) according to claim 6, wherein the one or more processors are configured to, after usage of the vehicle ends, transmit the user identification information and the settings information of software of the at least one of the electronic control units (11, 13a, 13b, 13c, 13d, 13e), to the server.

8. A center (1) configured to communicate with a vehicle, the center (1) comprising:
a storage device (23) configured to store usage information, in which settings information of software executed by at least one of a plurality of electronic control units (11, 13a, 13b, 13c, 13d, 13e) installed in the vehicle is correlated with user identification information that identifies a user of the vehicle; and
one or more processors configured to
receive, from an over-the-air master (11) that is one of the electronic control units (11, 13a, 13b, 13c, 13d, 13e), the user identification information specified by the over-the-air master (11), and
transmit the settings information correlated with the user identification information to the over-the-air master (11) based on the user identification information which is specified and the usage information.

9. An over-the-air master (11) configured to communicate with a center, the over-the-air master (11) comprising one or more processors configured to:
acquire user identification information that identifies a user of a vehicle;
acquire, from the center, settings information of software executed by at least one of a plurality of electronic control units (11, 13a, 13b, 13c, 13d, 13e) installed in the vehicle, the settings information being correlated with the user identification information; and
transfer the settings information to the at least one of the electronic control units (11, 13a, 13b, 13c, 13d, 13e).
